# EUROPEAN PATENT SPECIFICATION

(11) **EP 2 804 411 B1**
(45) Date of publication and mention of the grant of the patent: **10.07.2019**
(21) Application number: 13167425.1
(22) Date of filing: 13.05.2013
(51) Int. Cl.: H04L 29/06, H04W 4/50, H04W 12/10, H04W 4/12, H04W 88/02, H04W 12/12

(54) **Method and system for authenticating an application for a mobile data processing terminal**
Verfahren und System zur Authentifizierung einer Anwendung für eine mobile Datenverarbeitungsstation
Procédé et système pour authentifier une application pour un terminal de traitement de données mobiles

(43) Date of publication of application: 19.11.2014
(73) Proprietor: Aspire Technology Limited, Dublin 18 (IE)
(72) Inventor: McCormack, Cyril, Dublin, D18 (IE); Glynn, Philippe, Dublin, D18 (IE); Friel, Declan, Dublin, D18 (IE)
(74) Representative: Purdylucey Intellectual Property

(56) References cited:
- CN-A- 102 663 320
- US-A1- 2012 240 236
- INKYUNG JEUN ET AL: "Enhanced Code-Signing Scheme for Smartphone Applications", 8 December 2011 (2011-12-08), FUTURE GENERATION INFORMATION TECHNOLOGY, SPRINGER BERLIN HEIDELBERG, BERLIN, HEIDELBERG, PAGE(S) 353 - 360, XP019170523, ISBN: 978-3-642-27141-0 * Abstract Section 3 and 4 *
- Kurt Wismer: "anti-virus rants: digital signatures are not a poor man's whitelist", , 4 August 2010 (2010-08-04), XP055091544, Retrieved from the Internet: URL:http://anti-virus-rants.blogspot.de/20 10/08/digital-signatures-are-not-poor-mans .html [retrieved on 2013-12-04]
- DAVID BARRERA ET AL: "Understanding and improving app installation security mechanisms through empirical analysis of android", PROCEEDINGS OF THE SECOND ACM WORKSHOP ON SECURITY AND PRIVACY IN SMARTPHONES AND MOBILE DEVICES, SPSM '12, 1 January 2012 (2012-01-01), page 81, XP055091631, New York, New York, USA DOI: 10.1145/2381934.2381949 ISBN: 978-1-45-031666-8

## Description

### Field of the Invention

The present invention relates to a method and system for authenticating an application considered for installation at a mobile data processing terminal. More particularly, the present invention is concerned with preventing the installation of a malicious application masquerading as an original application.

### Background of the Invention

Two important aspects of the fast adoption of mobile data processing terminals, particularly smartphones, are that they have now reached the status of mass-market consumer items rather than remain the preserve of a subset of technology-savvy consumers, and that, consequentially, mainstream media are placing such devices and their applications, in particular fashionable and popular ones, ever more in the public eye via topical articles and news items. This has resulted in a corresponding, opportunistic increase in instances of 'fake' applications developed by cybercriminals, which masquerade as original applications and constitute, at best, infringements of copyright vesting in the copied applications but, at worst and increasingly, a malicious set of instructions misrepresented as the original application, known as 'malware' both colloquially and to the skilled person.

In a recent analysis published at http://thenextweb.com/google/2012/10/05/over-60-percent-of-android-malware-comes-from-one-family-hides-in-fake-versions-of-popular-apps/, the well-known security software developer McAfee™ reported that over 60% of the smartphone malware which they sampled took the form of malware masquerading as a popular mobile application. This type of malware has only recently been widely reported upon, as some of the fake applications were created to masquerade as globally-notorious applications. Authors of such malware have also been seen to implement various types of malware functionality intended to defeat detection by security software, including server-side polymorphism, obfuscation, anti-reversing techniques and frequent recompilation. There have also been instances of the malware being bundled with a legitimate version of popular application.

Typically, cybercriminals create fake versions of a given popular Android™ mobile application for defrauding unsuspecting users from their currency. The fake applications appear legitimate, including screenshots, descriptions, user reviews, videos and more in relation to the original application. The malware authors also often set up fake websites advertising the fake version of the application. Many of these are shared on specialist websites, but many are also shared on fake Facebook™ and Twitter™ accounts that spam legitimate users on social networks.

Upon installation, the malware often displays a service agreement informing the mobile terminal user, that one or more Short-Message-Service (SMS) messages will be sent. The mobile terminal user is forced to click an 'Agree' or 'Next' button in order to progress the installation, and some malware applications are known send the SMS messages even before the mobile terminal user interacts with the user interface and clicks the button, the level of sophistication in some cases including fake communication progress bars for maintaining the misrepresentation to the user.

In the background, unbeknownst to the mobile terminal user, the malicious mobile application sends expensive international text messages to earn its authors revenue. Some variants even connect to a Command & Control (C&C) server to send and retrieve data, as well as await further instructions, instantiating the compromised mobile terminal as what is known both colloquially and to the skilled person as a 'bot'.

An example of malware is the application known as 'Fakelnstaller', early versions of which were created to specifically target Eastern European mobile terminal users. However, malware authors have since expanded their fraudulent activities to other countries by adding instructions to obtain a mobile device's Mobile Country Code and Mobile Network Code and, based on that information, the malware is able to select corresponding premium-rate numbers.

A well-documented example of a fake mobile application occurred with Instagram™, a mobile application which very quickly achieved mass user acceptance with approximately 5 million downloads in the first week of its release. The company who released Instagram™ also received significant publicity after it was purchased by Facebook™. In light of this publicity, a fake version of Instagram was published on a number of websites, as documented at http://nakedsecuritv.sophos.com/2012/04/18/fake-instaaram-app-android-malwar/. This 'fake' Instagram™ application initiated premium SMS messages, incurring unforeseen expense for any user who obtained and installed it on their mobile terminal.

Further recent and well-known examples include such notorious applications as Angry Birds Space™ as documented at http://www.zdnet.com/warning-fake-skype-app-on-android-is-malware-7000000418/, Skype™ as documented at http://androidcommunity.com/fake-angry-birds-space-app-is-a-trojan-in-disguise-20120413/ and Netflix™ as documented at http://readwrite.com/2011/10/12/beware-of-fake-netflix-android. In the case of Angry Birds™, a trojan horse application which Sophos™ detected as Andr/KongFu-L appeared to be a fully-functional version of the popular smartphone game, but used the 'GingerBreak' exploit to gain root access to the device, and install malicious code. Such trojan horse applications communicate with a remote website in an attempt to download and install further malware onto a compromised smartphone. The malware applications frequently hide their payload, in the form of one or more malicious ELF files, in image files typically to the JPG format and at the end of the file. With the malware in place, cybercriminals can send instructions to compromised Android™devices to download further code, or to push URLs to be displayed in the browser of a smartphone, whereby such compromised Android™devices effectively become part of a botnet.

Currently, downloading mobile applications from official repositories, such as the well-known Google™ Playstore™, appears to remain the safest approach to guard against malware masquerading as popular applications. The Playstore™ has experienced its own issues with fake applications, but such issues have been limited to illegitimately-distributed infringing copies of applications, rather than malware intended to compromise terminals and/or user identity tokens and credentials.

Nevertheless, the ongoing proliferation of such repositories, both official and unofficial, maintain confusion for consumers, which cybercriminals are prompt to exploit: there is a wide range of official independent mobile application stores, as documented at http://en.wikipedia.org/wiki/SlideME, arising from the avoidance of US trade embargo measures implemented by Google™, as documented at https://support.google.com/googleplay/android-developer/answer/113770?hl=en and https://support.google.com/googleplay/android-developer/answer/150324?hl=en.

Some of these independent application stores provide perfectly legitimate applications, such as the well-known Amazon™ online retailer, as documented at http://community.skype.com/t5/Android/Skype-app-on-Amazon-real-or-fake/td-p/463845. Plenty more independent application stores, however, provide downloads of copied, cracked and otherwise illegitimate applications, including in particular malware.

As the McAfee™ analysis notes, it is currently difficult to detect a malicious set of instructions hidden in fake applications using conventional signature-based malware detection, because the revenue opportunity for cybercriminals is such that it justifies their continuous modifications to those fake applications and employing server-side polymorphism in order to evade detection.

An improved method of authenticating an application for a mobile data processing terminal connected to a network, over which the application is obtained from a first remote server, is therefore required, and a system embodying this method, which mitigate at least the above shortcomings of the prior art.

### Summary of the Invention

The inventors have realized that the core weakness exploited by cybercriminals is the information about an application which is presented to the mobile terminal user in a browser or other user interface for selecting and obtaining the application. This information is necessarily styled to misrepresent the original application and consists of the application label, which is a alphanumerical string corresponding to the title of the application, and the application icon, which is a graphical work representing the application file, wherein both the label and icon are displayed in the browser or interface and the name is typically located directly under the icon. Accordingly, the inventors have devised a method and system for performing pattern recognition on both the application label and the application icon, by comparing same to a maintained list of corresponding sequences of genuine applications.

According to an aspect of the present invention, as set out in the appended claims, there is therefore provided a method of authenticating an application for a mobile data processing terminal connected to a network over which the application is obtained from a first remote server, the method comprising the steps of encoding, in each original application, a first data sequence uniquely representative of its compiling source and at least a second data sequence uniquely representative of the original application; storing a plurality of first and second data sequences at the mobile data processing terminal; extracting the first and second data sequences of the obtained application therefrom and comparing same to the plurality of stored first and second data sequences for respective matches; and authenticating the obtained application when the extracted first and second data sequences respectively match stored corresponding first and second data sequences.

In an embodiment of the method according to the invention, the method may comprise the further step of storing the plurality of first and second data sequences in a list representative of applications obtained by most mobile data processing terminals connected to the network over a predetermined period of time.

In a variant of this embodiment, the step of comparing may comprise the further step of comparing the first and second data sequences of the obtained application to the list of stored first and second data sequences.

In an embodiment of the method according to the invention, the method may comprise the further steps of installing the obtained application at the mobile data processing terminal further to its authentication, and at least temporarily blocking the installation when at least one matching of the first or second data sequence of the obtained application fails.

In a variant of this embodiment, the method may comprise the further step of determining at least one data processing permission requested by an obtained but temporarily blocked application and comparing the determined permission to a predetermined set of application data processing permissions deemed to be malicious.

In a variant of this embodiment, the method may comprise the further step of determining at least one data processing permission requested by an obtained but temporarily blocked application and to compare requested permissions for the downloaded app with requested permissions for the 'official' original version of this app, i.e. the version with which the downloaded app is compared.

In an embodiment of the method according to the invention, the method may comprise the further step of forwarding the obtained application to a second remote server for remote authentication. This embodiment is deemed particularly useful for mitigating the performance requirements of the method performed at the mobile terminal, by delegating additional data processing tasks associated with further authentication steps to the second remote server.

In a variant of this embodiment, the method may comprise the further steps of subjecting each original application to a hashing function and outputting a respective hash key as a third data sequence uniquely representative of the original application, wherein the step of storing may comprise the further step of storing a plurality of third data sequences at the mobile data processing terminal or at the server; and subjecting the obtained application to the hashing function, outputting a respective hash key as the third data sequence thereof, and comparing same against the plurality of stored third data sequences for a match, wherein the step of authenticating may comprise the further step of authenticating the obtained application when the extracted third data sequences matches a stored corresponding third data sequence.

In a variant of this or the previous embodiment, the step of forwarding causes the mobile data processing terminal to suspend installation of the obtained application until the second remote server communicates a remote authentication thereof.

According to another aspect of the present invention, there is also provided a system for authenticating an application at a mobile data processing terminal, comprising the mobile data processing terminal, a network to which the mobile terminal is connected, and at least a first remote server from which the application is obtained by the mobile terminal over the network. The system is characterized in that, in each original application are encoded a first data sequence uniquely representative of a compiling source for the original application and at least a second data sequence uniquely representative of the original application, and the mobile terminal is configured to store a plurality of first and second data sequences, extract the first and second data sequences of the obtained application therefrom, compare same the plurality of stored first and second data sequences for respective matches, and authenticate the obtained application when the extracted first and second data sequences respectively match stored corresponding first and second data sequences.

In an embodiment of the system according to the invention, the mobile terminal may be further configured to install the obtained application at the mobile data processing terminal further to its authentication, and to at least temporarily block an installation of the obtained application when at least one matching of the first or second data sequence of the obtained application fails.

In a variant of this embodiment, the mobile terminal may be further configured to determine at least one data processing permission requested by an obtained but temporarily blocked application, and to compare the determined permission to a predetermined set of application data processing permissions deemed to be malicious.

In a variant of this embodiment, the mobile terminal may be further configured to determine at least one data processing permission requested by an obtained but temporarily blocked application, and to compare requested permissions for the downloaded app with requested permissions for the 'official' original version of this app, i.e. the version with which the downloaded app is compared.

In an embodiment of the system according to the invention, either or both of the first and second uniquely representative data sequence may be a hash key, wherein the extraction by the configured mobile terminal comprises subjecting the obtained application to a hashing function for outputting at least one of the first and second data sequence thereof as a hash key.

An embodiment of the system according to the invention may further comprise at least a second remote server connected to the network, wherein the mobile terminal is further configured to forward the obtained application to the second remote server for remote authentication.

In a variant of this embodiment, the mobile data processing terminal is further configured to suspend installation of the obtained application until the remote server communicates a remote authentication thereof.

According to yet another aspect of the present invention, there is also provided a set of instructions recorded on a portable computer-readable which, when read from the medium and processed by a mobile data processing terminal having networking means and obtaining an application from a remote server over a network, configures the terminal to store a plurality of first data and second data sequences, wherein each first data sequence is uniquely representative of a compiling source for an original version of the application and each second data sequence is uniquely representative of the original version of the application, and both the first and second data sequences are encoded in each original application; extract the first and second data sequences of the obtained application therefrom and compare same to the plurality of stored first and second data sequences for respective matches; and authenticate the obtained application when the extracted first and second data sequences respectively match stored corresponding first and second data sequences.

For any of the above embodiments and further variants, the original application may be an APK file, and the first data sequence uniquely representative of its compiling source may preferably be a signed certificate stored in the META-INF directory thereof.

For any of the above embodiments and further variants still, the original the second data sequence uniquely representative of the original application is preferably associated with the application icon.

For any of the above embodiments and further variants, the mobile computing device in network communication with one or more servers may selected from the group comprising computers, portable computers, tablet computers, mobile telephone handsets.

In one embodiment there is provided a set of instructions recorded on a data carrying medium which, when read from the medium and processed by a mobile data processing terminal having networking means and obtaining an application from a remote server over a network, configures the terminal to
store a plurality of first data and second data sequences, wherein each first data sequence is uniquely representative of a compiling source for an original version of the application and each second data sequence is uniquely representative of the original version of the application, and both the first and second data sequences are encoded in each original application;
extract the first and second data sequences of the obtained application therefrom and compare same to the plurality of stored first and second data sequences for respective matches; and
authenticate the obtained application when the extracted first and second data sequences respectively match stored corresponding first and second data sequences.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 shows a network environment comprising a communication network, a plurality of mobile data processing terminals and a plurality of remote servers.
Figure 2 is a logical diagram of a typical hardware architecture of a mobile computing device shown in Figure 1, including memory means.
Figure 3 is a logical diagram of a typical hardware architecture of each remote server shown in Figure 1, including memory means.
Figure 4 details data processing steps of a method performed at the mobile data processing terminal in the environment of Figure 1 according to a first embodiment of the invention.
Figure 5 details data processing steps of a method performed at the mobile data processing terminal in the environment of Figure 1 according to a second embodiment of the invention.
Figure 6 details data processing steps of a method performed at the mobile data processing terminal in the environment of Figure 1 according to a third embodiment of the invention.
Figure 7 details data processing steps of a method performed at the mobile data processing terminal in the environment of Figure 1 according to a fourth embodiment of the invention.
Figure 8 details data processing steps of a method performed at the mobile data processing terminal and a remote server in the environment of Figure 1 according to a second embodiment of the invention.
Figure 9 is a logical diagram of the contents of the memory means of the mobile data processing terminal shown in Figures 1 and 2, when performing the method of any of Figures 4 to 8.
Figure 10 is a logical diagram of the contents of the memory means of the second remote server configured according to the invention shown in Figures 1 and 3, when performing the method of Figure 8.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

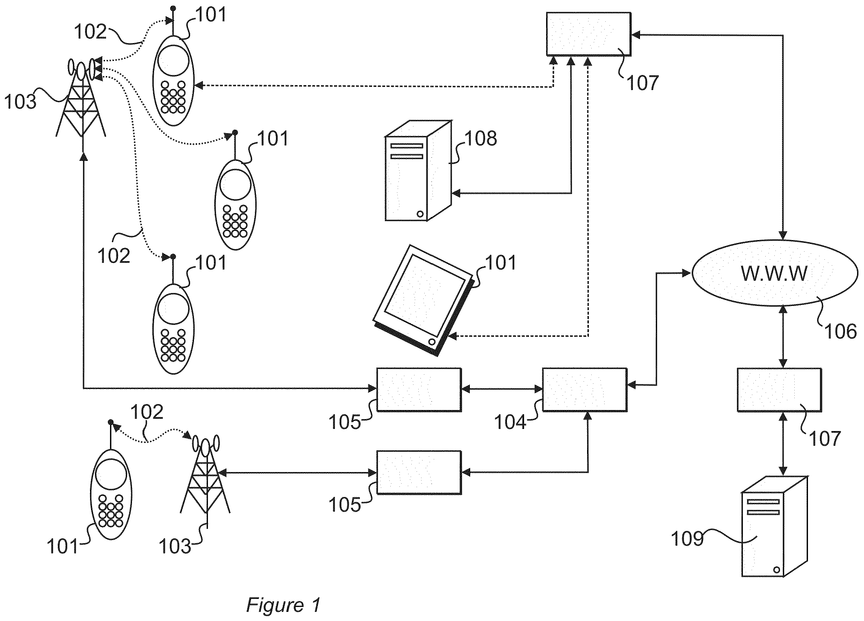

With reference to Figures 1 to 3, an example embodiment of a system according to the invention is shown within a networked environment comprising a plurality of mobile computing devices 101 as described hereafter, each adapted to communicate with at least a first remote server 108 as described hereafter for obtaining one or more applications stored thereat according to conventional techniques, and further adapted according to the invention to communicate with at least a second remote server 109 as described hereafter for at least obtaining a plurality of application-respective data sequences processed to authenticate an application obtained from the first server.

In the example therefore, each user is equipped with a respective mobile computing device 101, typically a mobile telephone handset 101, also known as a 'smartphone'. Each mobile telephone handset 101 has wireless telecommunication emitting and receiving functionality over a cellular telephone network 100 configured according to the International Mobile Telecommunications-2000 ('IMT - 2000') network industry standards, thus including UMTS/CDMA-2000/EDGE or '3G', IEEE802.16e/LTE Advanced or '4G', and wherein telecommunication is performed as voice, alphanumeric or audio-video data using the Short Message Service ('SMS') protocol, the Wireless Application protocol ('WAP') the Hypertext Transfer Protocol ('HTTP') or the Secure Hypertext Transfer Protocol ('HTTPS'). The handset 101 is preferably that commonly referred to as a 'smartphone' and may for instance be an iPhone™ handset manufactured by the Apple Corporation or a Nexus One™ handset manufactured for Google, Inc. by the HTC Corporation.

The mobile telephone handset 101 receives or emits voice, text, audio and/or image data encoded as a digital signal over a wireless data transmission 102, wherein the signal is relayed respectively to or from the handset by the geographically-closest communication link relay 103 of a plurality thereof. The plurality of communication link relays 103 allows digital signals to be routed between the handset 101, as it is geographically displaced in use, and its communication target(s) by means of a remote gateway 104 via a MSC or base station 105. The gateway 104 is for instance a communication network switch, which couples digital signal traffic between wireless telecommunication networks, such as the cellular network 100 within which wireless data transmissions 102 take place, and another network 106 with a different protocol or topography, for instance a Wide Area Network ('WAN') such as the Internet 106. Accordingly, the gateway 104 further provides protocol conversion if required, for instance whether a handset 101 uses the WAP or HTTPS protocol to communicate data.

Alternatively, or additionally, the mobile telephone handset 101 may have wireless telecommunication emitting and receiving functionality over a wireless local area network ('WLAN') conforming to the 802.11 standard ('Wi-Fi'). In the WLAN, telecommunication is likewise performed as voice, alphanumeric and/or audio-video data using the Internet Protocol (IP), Voice data over IP ('VoIP') protocol, Hypertext Transfer Protocol ('HTTP') or Secure Hypertext Transfer Protocol ('HTTPS'), the signal being relayed respectively to or from the data processing device 101 by a wireless (WLAN) router 107 interfacing the mobile data communication device 101 to a WAN communication network 106.

Generally, the computing device 101 may be any portable data processing device having at least data processing means, data display means, wireless communication means and an interface means suitable for accessing a repository of mobile applications and communicating with remote terminals 101 and/or servers 108, 109 as described hereafter. It will therefore be readily understood by the skilled person from the present disclosure, that the mobile computing device 101 may instead be a portable computer commonly referred to as a 'laptop' or 'netbook', a tablet computer such as an Apple™ iPad™ or a Motorola™ XOOM™, a personal digital assistant such as an Hewlett-Packard™ iPaq™, and the like.

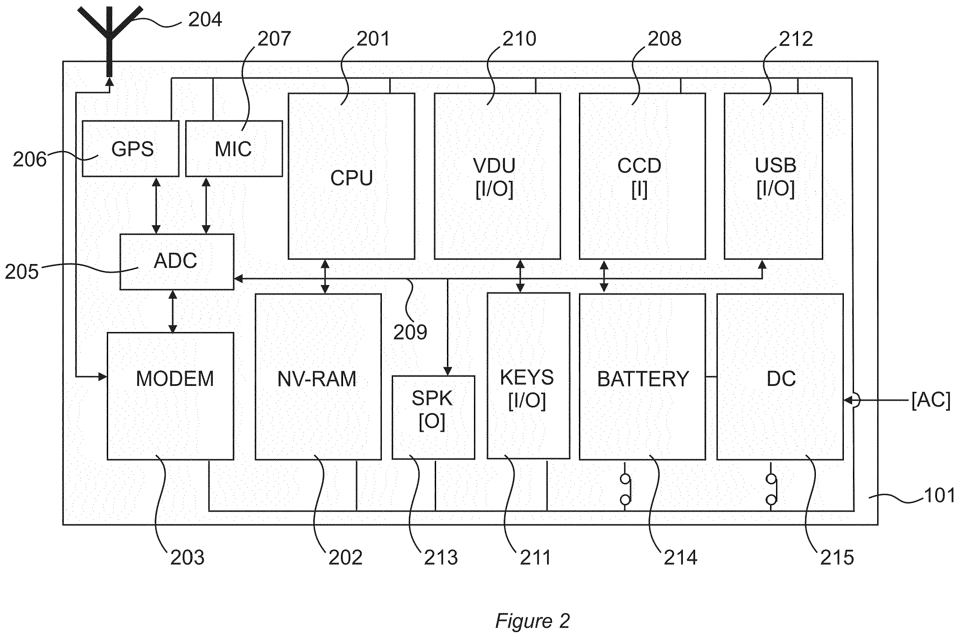

A typical hardware architecture of the mobile telephone handset 101 of the example is shown in Figure 2 in further detail, by way of non-limitative example. The handset 101 firstly includes a data processing unit 201, for instance a general-purpose microprocessor ('CPU'), acting as the main controller of the handset 101 and which is coupled with memory means 202, comprising non-volatile random-access memory ('NVRAM'), either permanently embedded within the terminal or in the form of a removable data storage medium such as an SD or mini-SD card, or both.

The mobile telephone handset 101 further includes a modem 203 to implement the wireless communication functionality, as the modem provides the hardware interface to external communication systems, such as the closest communication link relay 103 and ensuing cellular telephone network 104, 105 shown in Figure 1. An aerial 204 coupled with the modem 203 facilitates the reception of wireless signals from nearby communication link relays 103. The modem 203 is interfaced with, or includes, an analogue-to-digital converter ('ADC') 205 for demodulating wavelength wireless signals received via the antenna 204 into digital data, and reciprocally for outgoing data.

The handset 101 may further include self-locating means in the form of a GPS receiver 206, wherein the ADC 205 receives analogue positional and time data from orbiting satellites (not shown), which the data processing unit 201 or a dedicated data processing unit processes into digital positional and time data.

The handset 101 further includes a sound transducer 207, for converting ambient sound waves, such as the user's voice, into an analogue signal, which the ADC 205 receives for the data processing unit 201 or a dedicated data processing unit to process into digital audio data.

The handset 105 may further include imaging means 208 in the form of an electronic image sensor, for capturing image data which the data processing unit 201 or a dedicated data processing unit processes into digital image data.

The CPU 201, NVRAM 202, modem 203, GPS receiver 206, microphone 207 and digital camera 208 are connected by a data input/output bus 209, over which they communicate and to which further components of the handset 101 are similarly connected, in order to provide wireless communication functionality and receive user interrupts, inputs and configuration data.

Alphanumerical and/or image data processed by CPU 201 is output to a video display unit 210 ('VDU'), from which user interrupts may also be received if it is a touch screen display. Further user interrupts may also be received from a keypad 211 of the handset or from an external human interface device ('HiD') connected to the handset via a Universal Serial Bus ('USB') interface 212. The USB interface advantageously also allows the CPU 201 to read data from and/or write data to removable storage devices. Audio data processed by CPU 201 is output to a speaker unit 213. Power is provided to the handset 101 by an internal module battery 214, which an electrical converter 215 charges from a mains power supply as and when required.

The networked environment next includes at least a first data processing terminal 108 configured as a server storing mobile applications and distributing same to requesting remote mobile telephone handsets 101 across the network, and at least a second data processing terminal 109 configured as a server adapted for communication with remote mobile telephone handsets 101 in the system of the present invention.

The first server 108 may be configured as a conventional mobile application store, or as a conventional web server, either configuration storing, communicating application labels and icons of, and uploading to any requesting mobile terminal 101, mobile application binaries, for example as APK files for mobile handsets operating under the android operating system.

Accordingly, each server 108, 109 emits and receives data encoded as a digital signal over a wired data transmission conforming to the IEEE 802.3 ('Gigabit Ethernet') standard, wherein the signal is relayed respectively to or from the computing device by a wired router 107 interfacing the server 108 to the WAN communication network 106. Generally, each server 108 may be any portable or desktop data processing device having networking means apt to establish a data communication with any one mobile communication device 101.

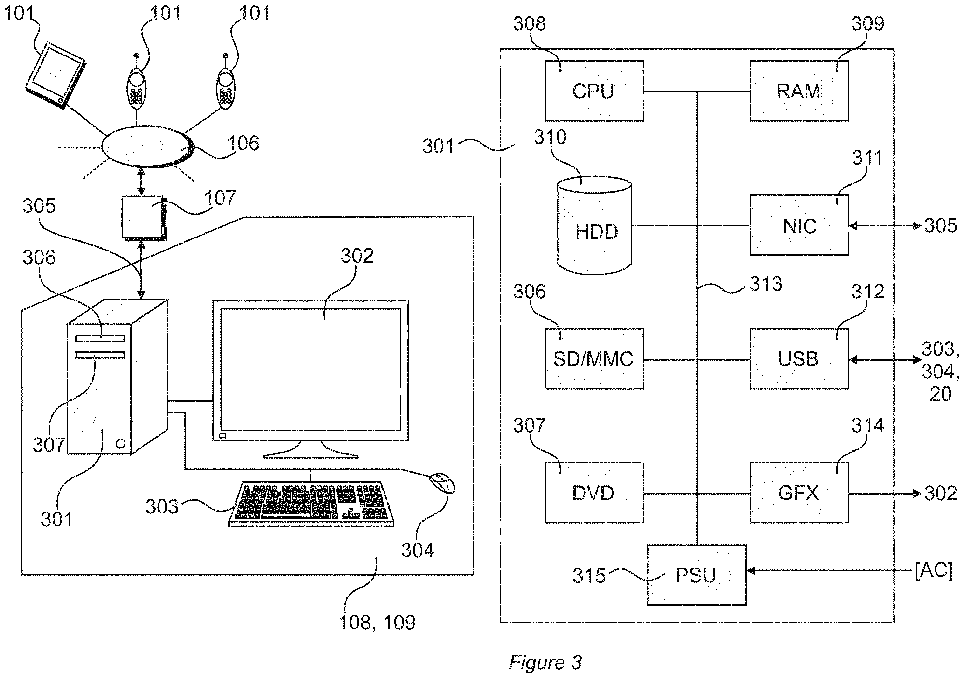

A typical hardware architecture of each data processing terminal 108, 109 is now shown in Figure 3 in further detail, by way of non-limitative example. The data processing device 108 is a computer configured with a data processing unit 301, data outputting means such as video display unit (VDU) 302, data inputting means such as HiD devices, commonly a keyboard 303 and a pointing device (mouse) 304, as well as the VDU 302 itself if it is a touch screen display, and data inputting/outputting means such as a wired network connection 305 to the communication network 106 via the router 107, a magnetic data-carrying medium reader/writer 306 and an optical data-carrying medium reader/writer 307.

Within data processing unit 301, a central processing unit (CPU) 308 provides task co-ordination and data processing functionality. Sets of instructions and data for the CPU 308 are stored in memory means 309 and a hard disk storage unit 310 facilitates non-volatile storage of the instructions and the data. A network interface card (NIC) 311 provides the interface to the network connection 305. A universal serial bus (USB) input/output interface 312 facilitates connection to the keyboard and pointing devices 303, 304.

All of the above components are connected to a data input/output bus 313, to which the magnetic data-carrying medium reader/writer 306 and optical data-carrying medium reader/writer 307 are also connected. A video adapter 314 receives CPU instructions over the bus 313 for outputting processed data to VDU 302. All the components of data processing unit 301 are powered by a power supply unit 315, which receives electrical power from a local mains power source and transforms same according to component ratings and requirements.

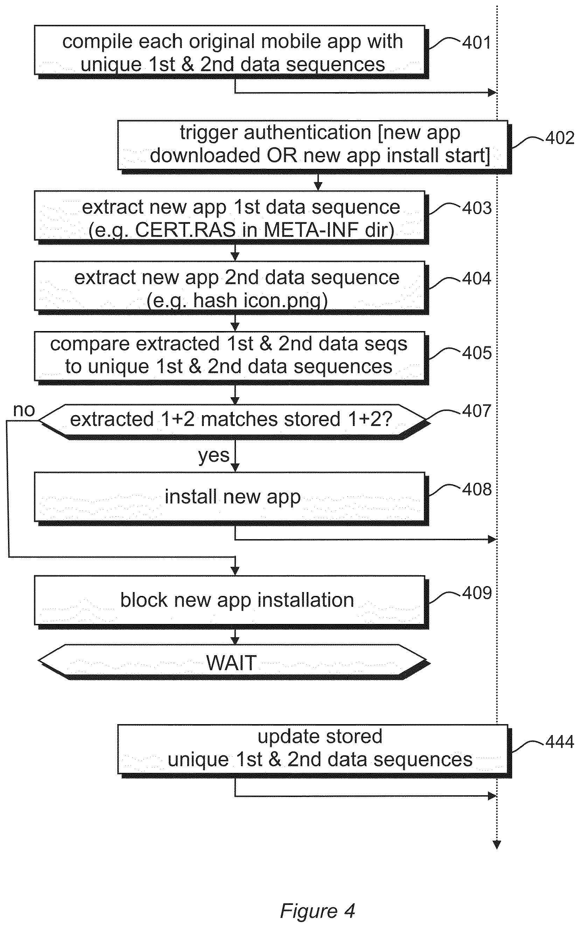

Details of the data processing steps of a first method of authenticating a downloaded application at each mobile terminal 101 according to the invention, as performed in the environment of Figure 1, are explained hereafter with reference to Figure 4.

The purpose of the authentication is to detect an application as a malicious set of instructions misrepresented as the original application to prevent its installation on and subsequent processing at the mobile terminal 101, which would achieve its compromising. Accordingly, a prerequisite is to encode, in each original application, a first data sequence uniquely representative of its compiling source and at least a second data sequence uniquely representative of the original application, at a first step 401.

In an embodiment, the first data sequence may be the signed certificate of the original application, which uniquely identifies the developer who compiled the original application, and the second data sequence uniquely identifies the original application icon. Signed certificates, application icon and related data sequences are embedded in application and application installation files and, in the example of an APK application installation file under the Android™ operating system, the signed certificate is CERT.RSA and the second data sequence is a hash key association with the icon.png file, and both are stored in the META-INF directory within the APK file.

Thereafter, the authenticating method is triggered at step 402 whenever a new application is obtained at the mobile terminal 101. The triggering event 402 may consist of the downloading of the new application within the memory means 202, or a procedure call to install the new application upon completion of its downloading, or even subsequently to the installation of the new application, but in any case before the installed application is first executed or opened for processing data pursuant to its functionality.

In a preferred embodiment, the triggering event consists of either of the first two events described above, since downloading a new application to an SD card is frequently indicative of side-loading the application from a unofficial mobile application store 108, which inherently riskier than from an official mobile application store 108, and authenticating at the onset of an installation procedure covers all applications, whether from an official or unofficial mobile application source 108.

At step 403, the first data sequence of the obtained application is extracted and, at step 404, the second data sequence of the obtained application is extracted. With reference to the APK file example described above, step 403 may consist in looking up the CERT.RSA in the META-INF directory within the APK file with a conventional Android™ Application Programmer Interface (API), and step 404 may consist in subjecting the icon.png file of the obtained application to the same hash function used with the icon.png file of the original application, typically SHA1 or SHA256. Alternatives will be readily envisaged by the skilled reader without departing from the scope of the present disclosure, for instance subjecting the entire APK file to a hash function rather than limiting same to the icon thereof.

In an embodiment, the first and second data sequences of the original application described with reference to step 401 are stored in at least one list in the memory means 202 of the mobile terminal, obtained from and periodically updated by the second remote server 109, for instance at a scheduled or unscheduled step 444. The list is preferably representative of those applications that are obtained by most mobile data processing terminals connected to the network over a predetermined period of time, for instance and advantageously those applications that are most popular amongst mobile terminal users at the time of the authenticating, thus in order to minimize both storage requirements for the list and the data processing requirements for the authenticating procedure, further in view of the fact that cybercriminals target such popular applications in preference. Alternatives will be readily envisaged by the skilled reader without departing from the scope of the present disclosure. For instance, one or more further purpose-specific or criteria-specific lists may be stored and, by way of non-limitative example, one such list may store the first and second data sequences of recent applications initially deemed suspicious but determined to be harmless.

Accordingly, at step 405, the first and second data sequences respectively extracted at steps 403 and 404 are compared with the stored first and second data sequences, being those of the original application, for respective matches. A question is then asked at step 407, as to whether corresponding stored sequences have been found for both the first and second data sequence of the obtained application, for instance in the stored list as described above or, in an alternative embodiment, in several criteria-specific lists, for instance in both the 'popular applications' list and the 'initially-suspicious-but-genuine' list described earlier. If the question of step 407 is answered positively, then authenticity is confirmed and the application installation is allowed to proceed as normal, at step 408. When the question of step 407 is answered negatively, then authenticity cannot be confirmed and the obtained application is considered a security risk and its installation is therefore blocked as a safety measure at step 409, at least temporarily.

There follows a visual example in pseudo-code form of the question of step 407 being answered positively, for an obtained application providing matches for both the first and second data sequences, resulting in its installation at the mobile terminal 101 at step 408 unhindered:
11-30 10:58:59.563: D/Install Application: ***Blablagram***
11-30 10:58:59.563: D/Mobile Application Sig:***xW+31ZG6ZwTfB =***
11-30 10:58:59.563: ListApp1 Aa: ***Blablagram***
11-30 10:58:59.563: ListApp1Ab: ***xW+31ZG6ZwTfB**=*
11-30 10:58:59.563: Match:D/ListApp1Aa/ListApp1 Ab

There follows a visual example in pseudo-code form of the question of step 407 being answered negatively, for an obtained application providing a single match for the first data sequence and a mismatch for the second, resulting in blocking its installation at the mobile terminal 101 at step 409:
11-30 10:58:59.563: D/Install Application: ***Blablagram***
11-30 10:58:59.563: D/Mobile Application Sig: ***Ye03foXThqjf7=***
11-30 10:58:59.563: ListApp1Aa: ***Blablagram***
11-30 10:58:59.563: ListApp1Ab: ***xW+31ZG6ZwTfB**=*
11-30 10:58:59.563: Match:D/ListApp1Aa/

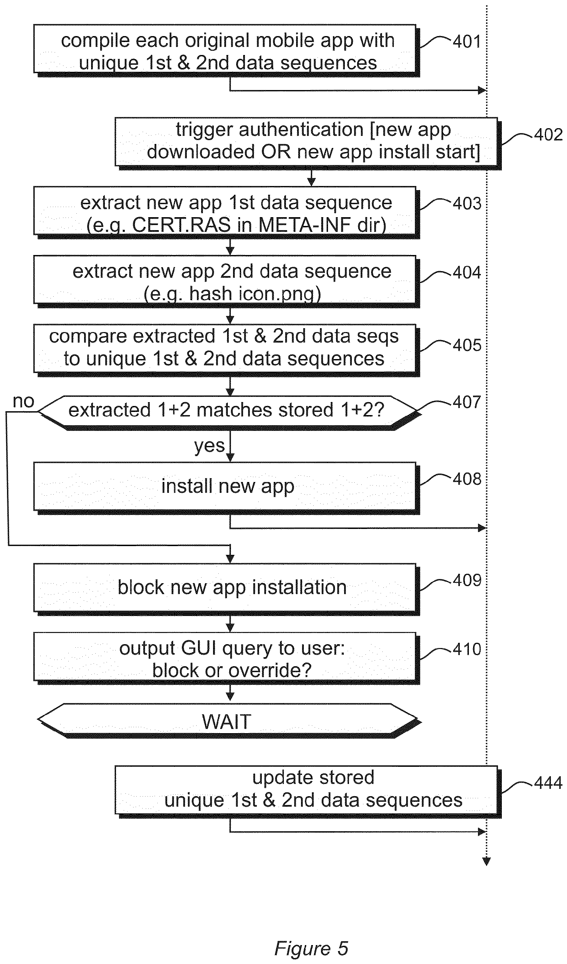

A variant of this embodiment, shown in Figure 5, considers the blocking to be made permanent or overridden by the user, who may be requested to validate or override the outcome of step 409 in a relevant user interface output to the terminal VDU 210 at a subsequent step 410.

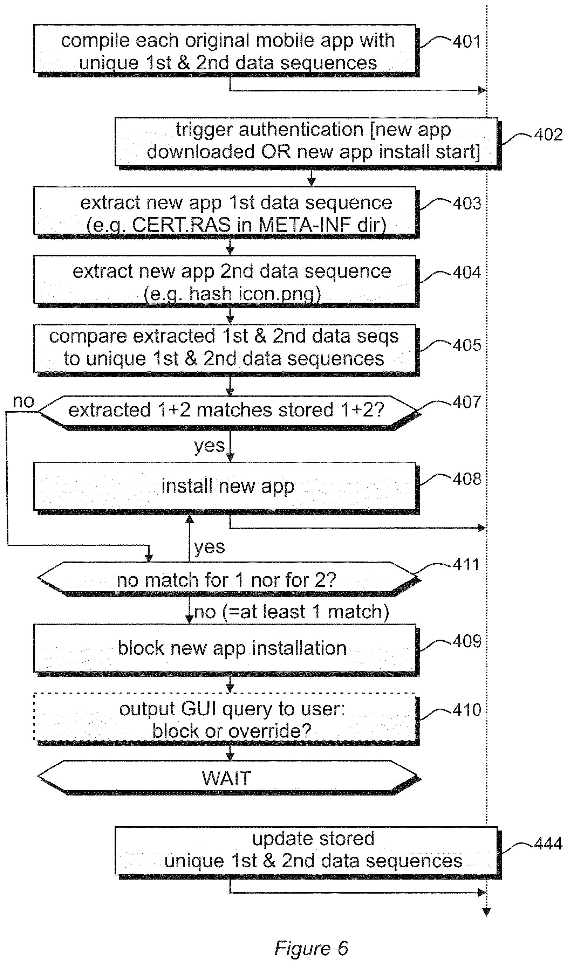

A further variant of the above embodiments, shown in Figure 6, considers a further question 411 asked after a negative answer to the question of step 407, however prior to step 409, as to whether no corresponding stored sequences have been found at all for either of the first and the second data sequences, and a positive answer to which causes the obtained application to be deemed a new original application and to be installed unhindered as at step 407.

There follows a visual example in pseudo-code form of the above further embodiment, for an obtained application providing no matches for either the first or the second data sequences at step 407, resulting in its installation at the mobile terminal 101 at step 408 unhindered:
11-30 10:58:59.563: D/Install Application: ***Blablagram***
11-30 10:58:59.563: D/Mobile Application Sig:***xW+31ZG6ZwTfB=***
11-30 10:58:59.563: ListApp1Aa:
11-30 10:58:59.563: ListApp1Ab:
11-30 10:58:59.563: Match:

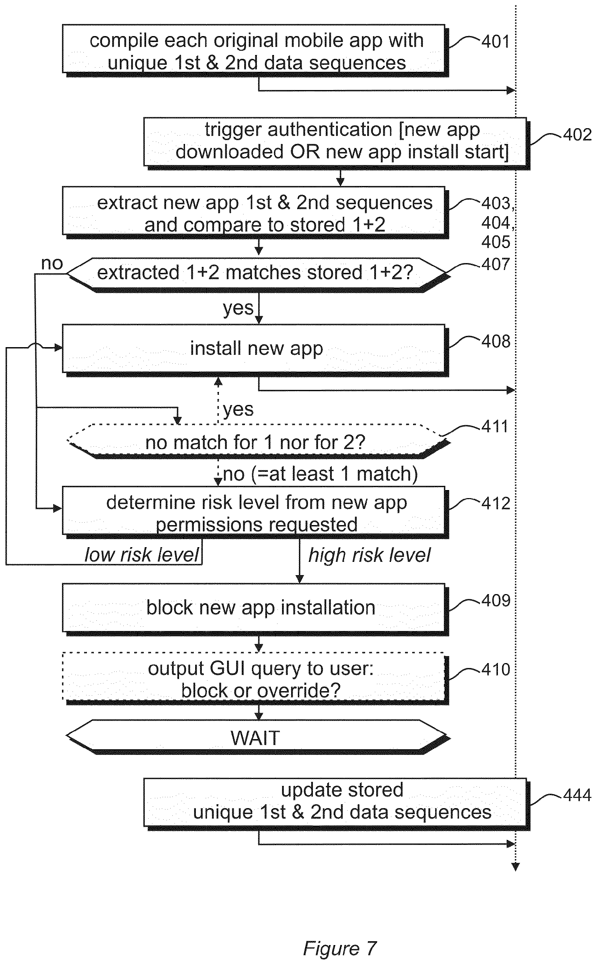

Still another variant of the above embodiments, shown in Figure 7, considers determining a risk level associated with data processing permissions requested by the obtained application, in addition to extracting and comparing the first and second data sequences. This permissions-based risk level may be determined at step 412 when a first or second data sequence mismatch occurs, to provide an indication of whether the obtained application is more likely to be a relatively harmless copy or potentially harmful malware. The determination output may thus be used to automatically allow installation at step 408 or not at step 409. Alternatively, the indication may be output to the relevant user interface when the user is requested to validate or override the outcome of step 409 as previously described, for instance in the form of a percentage likelihood of the obtained application being safe or not. There is also the option to compare requested permissions for the downloaded app with requested permissions for the 'official' original version of this app, i.e. the version with which the downloaded app is compared.

There follows a visual example in pseudo-code form of the above further embodiment, for an obtained application providing a mismatch for the first data sequence and a mismatch for the second, causing a further determination of a risk level for the obtained application, and in which case the risk level would be deemed highest, because the permissions requested allow the obtained application to read and broadcast SMS messages:
11-30 10:58:59.563: D/Install Application: ***Blablagram_dlya_Android***
11-30 10:58:59.563: D/Mobile Application Sig: ***XSJM4jkLaoTS5***
11-30 10:58:59.563: ListApp1Aa:
11-30 10:58:59.563: ListApp1Ab:
11-30 10:58:59.563: Match:
11-30 12:51:33.269: D/permission list: ***android.permission.READ_SMS***
11-30 12:51:33.269: D/permission list: ***android.permission.SEND_SMS***
11-30 12:51:33.279: D/permission list: ***android.permission.RECEIVE_SMS***

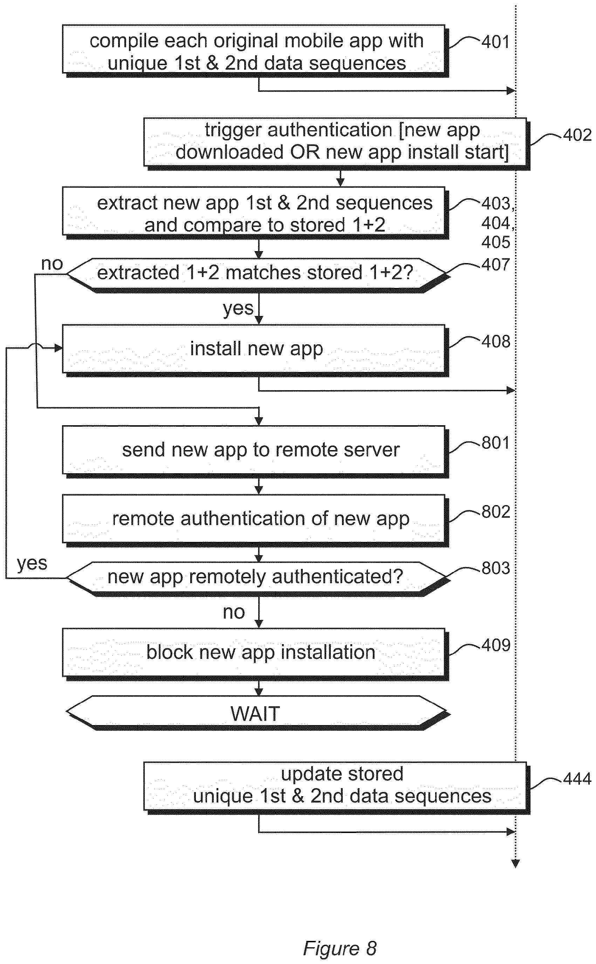

Details of the data processing steps of a second method of authenticating a downloaded application at each mobile terminal 101 according to the invention, as performed in the environment of Figure 1, are now explained hereafter with reference to Figure 8, wherein the second remote server 109 partakes in the authenticating.

In this embodiment, steps 401 to 408 correspond to those steps described with reference to Figure 4. However, when the question of step 407 is answered negatively, then authenticity cannot be confirmed and, in the present embodiment, the set of instructions forwards the obtained application to the second remote server 109 for further processing in order to perform remote authenticating at step 801. At step 802, the remote server performs a risk level determination on the forwarded obtained application, for instance based on the permissions it requests, s previously described in relation to step 412.

A question is next asked at step 803, as to whether the server has confirmed, in a network reply message subsequently to performing step 802, whether the obtained application has been remotely authenticated. If the question of step 803 is answered positively, control returns to step 408 whereby the application installation is allowed to proceed as normal. Alternatively, the question of step 803 is answered negatively, wherein the authenticity cannot be confirmed remotely either and control returns to step 409, whereby the obtained application is considered a security risk and its installation is therefore blocked.

This embodiment is considered particularly advantageous for those mobile terminals 101 having limited data processing resources, such as a slow CPU 201 and/or a limited amount of NVRAM 202 in which to store comparison data at runtime. It will be readily understood by the skilled reader that this embodiment may be combined with any of the variants described in relation to Figures 5 to 7. For instance, with reference to the embodiment relying upon one or more lists of first and second data sequences of original applications, a mismatch of both the first and second data sequences may result in proceeding to step 801, rather than allowing the obtained application to be installed. Likewise, a negative answer to the question of step 803 may result in momentarily blocking the installation, but requesting the user of mobile terminal 101 to validate or override the blocking in a relevant user interface output to the terminal VDU 210 at step 410. Further, the availability of any of the embodiments relying upon the second server 109 described above may be made conditional upon the condition of the network latency or bandwidth and/or the current data processing load of the second server 109, determined in real-time prior to performing step 801.

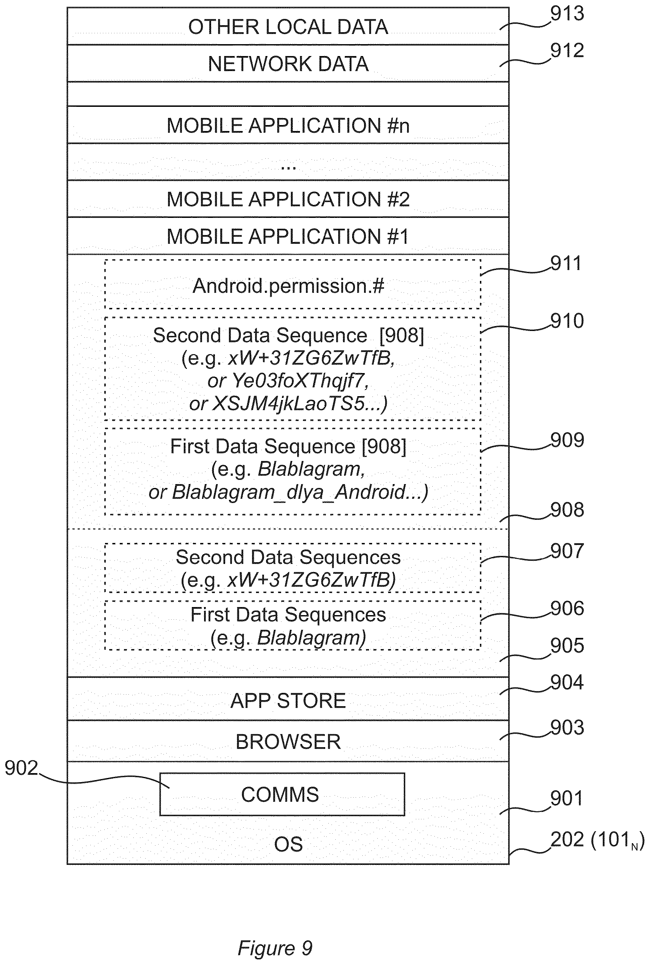

A logical diagram of the contents of the memory means 202 of the mobile communication device 101, when performing steps of the method of Figure 4 to 8 at runtime, is shown in Figure 9. An operating system is shown at 901 which, depending on the handset manufacturer, may be iOS 5™ developed and distributed by Apple Inc. or Android™developed and distributed by Google Inc.

A communication subset 902 of the OS 901 receives and processes all incoming and outgoing signalling data, respectively to or form any installed application #1, #2, #3...#n, and processed as local data by the mobile communication device 101. Such installed applications include at least a browser application 903 and/or an application store application 904, through either of which new applications may be obtained.

A set of instructions is shown at 905, which configures the mobile communication device 101 to perform a method as described with reference to any of Figures 4 to 8, and which is interfaced with at least the OS 901 and, in embodiments of the method communication of the mobile terminal 101 with the second remote server 109, then with the communication subset 902 thereof, via one or more suitable Application Programmer Interfaces.

Data processed by the set of instructions 905 comprises first and second data sequences 906, 907 of original applications processed by the set of instructions 905 for the comparison step with as previously described, and momentarily comprises any newly obtained application 908 downloaded from a remote server, in the example the first remote server 108, whether stored in embedded NVRAM 202 or in a removable data storage medium 202, before it is installed for use. Thus data processed by the set of instructions 905 also comprises the first and second data sequences 909, 910 extracted from the obtained application 906, and optionally the permissions list 911 determined therefrom.

Network data shown at 912 and comprises incoming and outgoing network data, respectively exchanged between the set of instructions 905 and a remote set of instructions processed by the second server 109. Depending on the embodiment of the method according to the invention, such network data 912 may therefore include inbound first and second data sequences 906, 907 of original applications per step 444, optionally in list form; an outbound copy of newly obtained application 908 for remote authenticating, and a corresponding authentication confirmation or denial, per the method described with reference to Figure 8. The memory 202 may further comprise local data 913 that is unrelated to the authentication application 905, for instance used by or generated for another application 903, 904, #1, #2, #3...#n being processed in parallel with the authentication application 905, typically input data of the user or graphical data for the OS or application user interface.

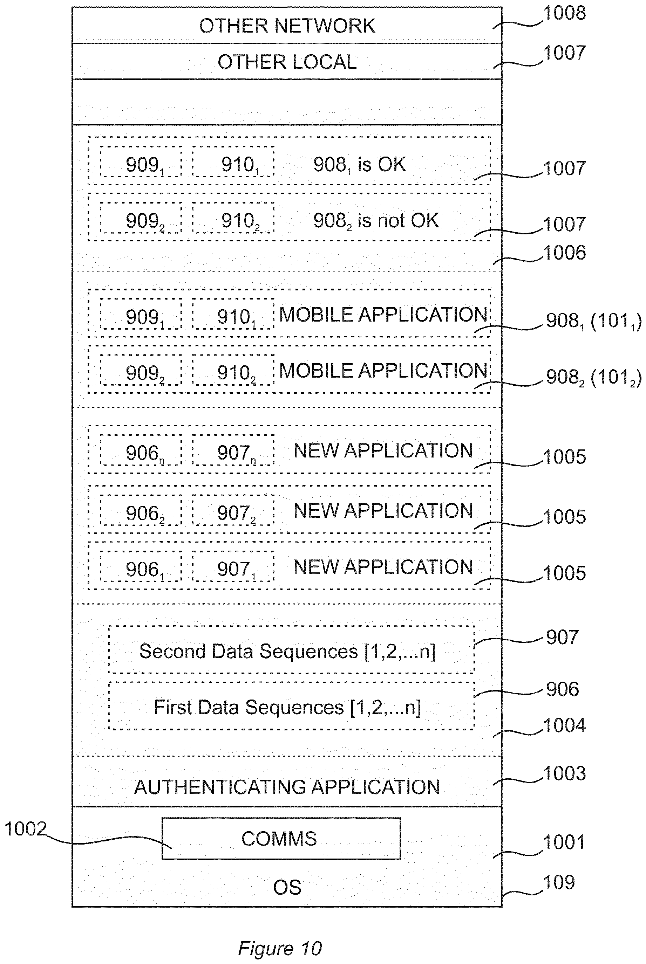

A logical diagram of the contents of the memory means 309 of the second server 109, when performing a method as described with reference to Figure 4 to 8 at runtime, is shown next in Figure 10. An operating system is shown at 1001 which, if the server 109 is a desktop computer, is for instance Windows 8™ distributed by the Microsoft Corporation. The OS 1001 includes communication subroutines 1002 to configure the terminal for bilateral network communication via the NIC 311.

An application is shown at 1003, which configures the server 108 to perform steps of the method according to the invention as described hereinbefore with reference to Figures 4 to 8, and which is interfaced with the OS 1001 and network communication subroutines 1002 thereof via one or more suitable Application Programmer Interfaces. In particular, the application 1003 comprises a database 1004 of first and second data sequences 906, 907 of original applications.

Data processed by the set of instructions 1003 comprises first and second data sequences 906, 907 of original applications 1005 processed then stored in the database 1004, which are forwarded to each remote application 905 at each remote mobile terminal 101 per step 444. With reference to the embodiment shown and described in relation to Figure 8, data processed by the set of instructions 1003 may further comprise, momentarily, any newly obtained application 908 which a remote terminal 101 requires to be authenticated. Thus data processed by the set of instructions 1003 may also comprise the first and second data sequences 909, 910 extracted from the obtained application 908, and optionally the permissions list 911 determined therefrom.

Network data is shown at 1006 and comprises incoming and outgoing network data, respectively exchanged between the set of instructions 1003 and one or more set of instructions 905 processed by respective, remote mobile terminals 101. Depending on the embodiment of the method according to the invention, such network data 1006 may therefore include outbound first and second data sequences 906, 907 of original applications 1005, optionally in list form; inbound copies of newly obtained applications 908 for remote authenticating, and corresponding authentication confirmations or denials 1007, per the method described with reference to Figure 8.

The memory 309 may further comprise local and/or network data that is unrelated to the application 1003, respectively shown at 107 and 108, as used by or generated for another application being processed in parallel with the application 1003.

It will be readily appreciated that the above embodiments and variants thereof may be implemented singularly or in combination, and are provided herein by way of example only, wherein many further modifications may be devised and implemented by the skilled reader without departing from the scope of the present disclosure.

For example, a further embodiment of the method according to the invention considers performing the authentication against a central repository of mobile applications, such as the server(s) maintaining and distributing the known iTunes™, Google™ Playstore™ or similar third-party mobile application stores, i.e. at the first server 108 of the example. In this embodiment, the method may be performed as a batch process, or triggered when a new mobile application is uploaded by a developer rather than per download instance.

Some enterprise Mobile Device Management (MDM) techniques are also known to provide a database of vetted and approved mobile applications, wherein only these may be downloaded to the enterprise handsets. Accordingly, another further embodiment of the method according to the invention considers performing the authentication at the relevant remote server that is part of such MDM solutions, again as a batch process or whenever a new mobile application is uploaded by a developer.

Considering the current practice of cybercriminals, of authoring and releasing iterative versions of their malware masquerading as a same highly popular application according to a fast cycle, as previously highlighted, yet another further embodiment of the method according to the invention considers performing the authentication at a plurality of central repositories for locating one or more fake versions of a specific original application. This embodiment is expected to be particularly beneficial in respect of mobile applications with a financial purpose or functionality, as these are known to be perennially targeted by cybercriminals.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a memory stick or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method of authenticating an application for a mobile data processing terminal connected to a network over which the application is obtained from a first remote server, the method **characterized by** the steps of encoding, in an original application, a first data sequence uniquely representative of its compiling source and at least a second data sequence uniquely representative of the original application;
storing the application including the encoded first and second data sequences in the first remote server; storing a plurality of first and second data sequences at the mobile data processing terminal; obtaining by the mobile data processing terminal the application from the first remote server;
extracting at the mobile data processing terminal the first and second data sequences of the obtained application therefrom and comparing the first and second data sequences to the plurality of stored first and second data sequences for respective matches; and authenticating at the mobile data processing terminal the obtained application when the extracted first and second data sequences respectively match stored corresponding first and second data sequences.

2. A method according to claim 1, comprising the further step of storing the plurality of first and second data sequences in a list representative of applications obtained by a plurality of mobile data processing terminals connected to the network over a predetermined period of time.

3. A method according to claim 2, wherein the step of comparing comprises the further step of comparing the first and second data sequences of the obtained application to the list of stored first and second data sequences.

4. A method according to claim any of claims 1 to 3, comprising the further steps of installing the obtained application at the mobile data processing terminal further to its authentication, and of at least temporarily blocking the installation when at least one matching of the first or second data sequence of the obtained application fails

5. A method according to claim 3, comprising the further step of determining at least one data processing permission requested by an obtained but temporarily blocked application and comparing the determined permission to a predetermined set of application data processing permissions deemed to be malicious.

6. A method according to any of claims 1 to 5, wherein either or both of the first and second uniquely representative data sequence is a hash key, and wherein the step of extracting comprises the further step of subjecting the obtained application to a hashing function for outputting at least one of the first and second data sequence thereof as a hash key.

7. A method according to any of claims 1 to 6, comprising the further step of forwarding the obtained application to a second remote server for remote authentication when the extracted first and second data sequences do not respectively match stored corresponding first and second data sequences.

8. A method according to claim 7, wherein the step of forwarding causes the mobile data processing terminal to suspend installation of the obtained application until the second remote server communicates a remote authentication thereof.

9. A method according to any of claims 1 to 8, wherein the original application is an APK file and the first data sequence uniquely representative of its compiling source is a signed certificate stored in the META-INF directory thereof.

10. A method according to any of claims 1 to 9, wherein the second data sequence uniquely representative of the original application is associated with the application icon.

11. A system for authenticating an application at a mobile data processing terminal, comprising
the mobile data processing terminal;
a network to which the mobile terminal is connected; and
at least a first remote server from which the application is obtained by the mobile terminal over the network;
**characterized in that** the system includes means for encoding in an original application a first data sequence uniquely representative of a compiling source for the original application and at least a second data sequence uniquely representative of the original application; means for storing the application including the encoded first and second data sequences in the first remote server; and the mobile data processing terminal is configured to store a plurality of first and second data sequences, obtain the application from the first remote server, extract the first and second data sequences of the obtained application therefrom, compare the first and second data sequences to the plurality of stored first and second data sequences for respective matches, and authenticate the obtained application when the extracted first and second data sequences respectively match stored corresponding first and second data sequences.

12. A system according to claim 11, wherein the mobile data processing terminal is further configured to install the obtained application at the mobile data processing terminal further to its authentication; and
at least temporarily block an installation of the obtained application when at least one matching of the first or second data sequence of the obtained application fails.

13. A system according to claim 12, wherein the mobile data processing terminal is further configured to determine at least one data processing permission requested by an obtained but temporarily blocked application and to compare the determined permission to a predetermined set of application data processing permissions deemed to be malicious.

14. A system according to any of claims 11 to 13, wherein either or both of the first and second uniquely representative data sequence is a hash key, and wherein the extraction by the configured mobile data processing terminal comprises subjecting the obtained application to a hashing function for outputting at least one of the first and second data sequence thereof as a hash key.

15. A system according to any of claims 11 to 14, further comprising at least a second remote server connected to the network and wherein the mobile data processing terminal is further configured to forward the obtained application to the second remote server for remote authentication when the extracted first and second data sequences do not respectively match stored corresponding first and second data sequences.

## Patentansprüche

1. Verfahren zum Authentifizieren einer Anwendung für ein mobiles Datenverarbeitungsendgerät, das mit einem Netzwerk verbunden ist, über das die Anwendung von einem ersten fernen Server erhalten wird, wobei das Verfahren durch die folgenden Schritte gekennzeichnet ist:
Encodieren, in einer ursprünglichen Anwendung, einer ersten Datensequenz, die eindeutig ihre Kompilierungsquelle repräsentiert, und wenigstens einer zweiten Datensequenz, die eindeutig die ursprüngliche Anwendung repräsentiert;
Speichern der Anwendung einschließlich der encodierten ersten und zweiten Datensequenz im ersten fernen Server;
Speichern von mehreren ersten und zweiten Datensequenzen an dem mobilen Datenverarbeitungsendgerät;
Erhalten der Anwendung von dem ersten fernen Server durch das mobile Datenverarbeitungsendgerät;
Extrahieren, an dem mobilen Datenverarbeitungsendgerät, der ersten und zweiten Datensequenz der erhaltenen Anwendung daraus und Vergleichen der ersten und zweiten Datensequenz mit den mehreren gespeicherten ersten und zweiten Datensequenzen auf jeweilige Übereinstimmungen; und
Authentifizieren, an dem mobilen Datenverarbeitungsendgerät, der erhaltenen Anwendung, wenn die extrahierten ersten und zweiten Datensequenzen jeweils mit entsprechenden ersten und zweiten Datensequenzen übereinstimmen.

2. Verfahren nach Anspruch 1, das den weiteren Schritt des Speicherns der mehreren ersten und zweiten Datensequenzen in einer Liste beinhaltet, die Anwendungen repräsentiert, die durch mehrere mobile Datenverarbeitungsendgeräte erhalten werden, die über eine vorbestimmte Zeitperiode mit dem Netzwerk verbunden sind.

3. Verfahren nach Anspruch 2, wobei der Schritt des Vergleichens den weiteren Schritt des Vergleichens der ersten und zweiten Datensequenz der erhaltenen Anwendung mit der Liste von gespeicherten ersten und zweiten Datensequenzen beinhaltet.

4. Verfahren nach einem der Ansprüche 1 bis 3, das die weiteren Schritte des Installierens der erhaltenen Anwendung am mobilen Datenverarbeitungsendgerät nach seiner Authentifizierung und des wenigstens vorübergehenden Sperrens der Installation beinhaltet, wenn wenigstens eine Übereinstimmung der ersten oder zweiten Datensequenz der erhaltenen Anmeldung versagt.

5. Verfahren nach Anspruch 3, das den weiteren Schritt des Bestimmens von wenigstens einer durch eine erhaltene, aber vorübergehend gesperrte Anwendung angeforderten Datenverarbeitungszulassung, und das Vergleichen der bestimmten Zulassung mit einem vorbestimmten Satz von als bösartig erachteten Anwendungsdatenverarbeitungszulassungen beinhaltet.

6. Verfahren nach einem der Ansprüche 1 bis 5, wobei die erste und/oder die zweite eindeutig repräsentative Datensequenz ein Hash-Schlüssel ist/sind, und wobei der Schritt des Extrahierens den weiteren Schritt des Unterziehens der erhaltenen Anwendung einer Hash-Funktion zum Ausgeben der ersten und/oder zweiten Datensequenz davon als Hash-Schlüssel beinhaltet.

7. Verfahren nach einem der Ansprüche 1 bis 6, das den weiteren Schritt des Weiterleitens der erhaltenen Anwendung zu einem zweiten fernen Server für eine ferne Authentifizierung beinhaltet, wenn die extrahierte erste und zweite Datensequenz nicht jeweils mit gespeicherten entsprechenden ersten und zweiten Datensequenzen übereinstimmen.

8. Verfahren nach Anspruch 7, wobei der Schritt des Weiterleitens bewirkt, dass das mobile Datenverarbeitungsendgerät die Installation der erhaltenen Anwendung unterbricht, bis der zweite ferne Server eine ferne Authentifikation davon kommuniziert.

9. Verfahren nach einem der Ansprüche 1 bis 8, wobei die ursprüngliche Anwendung eine APK-Datei ist und die erste Datensequenz, die ihre Kompilierungsquelle eindeutig repräsentiert, ein im META-INF-Verzeichnis davon gespeichertes signiertes Zertifikat ist.

10. Verfahren nach einem der Ansprüche 1 bis 9, wobei die zweite Datensequenz, die die ursprüngliche Anwendung eindeutig repräsentiert, mit dem Anwendungs-Icon assoziiert ist.

11. System zum Authentifizieren einer Anwendung an einem mobilen Datenverarbeitungsendgerät, das Folgendes umfasst:
das mobile Datenverarbeitungsendgerät;
ein Netzwerk, mit dem das mobile Endgerät verbunden ist; und
wenigstens einen ersten fernen Server, von dem die Anwendung von dem mobilen Endgerät über das Netzwerk erhalten wird;
**dadurch gekennzeichnet, dass**
das System Mittel zum Encodieren, in einer ursprünglichen Anwendung, einer ersten Datensequenz, die eine Kompilierungsquelle für die ursprüngliche Anwendung eindeutig repräsentiert, und wenigstens einer zweiten Datensequenz beinhaltet, die die ursprüngliche Anwendung eindeutig repräsentiert;
Mittel zum Speichern der Anwendung einschließlich der encodierten ersten und zweiten Datensequenz im ersten fernen Server; und
das mobile Datenverarbeitungsendgerät konfiguriert ist zum Speichern von mehreren ersten und zweiten Datensequenzen, Erhalten der Anwendung vom ersten fernen Server, Extrahieren der ersten und zweiten Datensequenz der erhaltenen Anwendung davon, Vergleichen der ersten und zweiten Datensequenz mit den mehreren gespeicherten ersten und zweiten Datensequenzen auf jeweilige Übereinstimmungen und Authentifizieren der erhaltenen Anwendung, wenn die extrahierte erste und zweite Datensequenz jeweils mit gespeicherten entsprechenden ersten und zweiten Datensequenzen übereinstimmen.

12. System nach Anspruch 11, wobei das mobile Datenverarbeitungsendgerät ferner konfiguriert ist zum Installieren der erhaltenen Anwendung an dem mobilen Datenverarbeitungsendgerät nach seiner Authentifizierung; und
zum wenigstens vorübergehenden Sperren einer Installation der erhaltenen Anwendung, wenn wenigstens eine Übereinstimmung der ersten und zweiten Datensequenz der erhaltenen Anwendung versagt.

13. System nach Anspruch 12, wobei das mobile Datenverarbeitungsendgerät ferner konfiguriert ist zum Bestimmen von wenigstens einer durch eine erhaltene, aber vorübergehend gesperrte Anwendung angeforderten Datenverarbeitungszulassung und zum Vergleichen der bestimmten Zulassung mit einem vorbestimmten Satz von als bösartig erachteten Anwendungsdatenverarbeitungszulassungen.

14. System nach einem der Ansprüche 11 bis 13, wobei die erste und/oder die zweite eindeutig repräsentative Datensequenz ein Hash-Schlüssel ist, und wobei die Extraktion durch das konfigurierte mobile Datenverarbeitungsendgerät das Unterziehen der erhaltenen Anwendung einer Hash-Funktion zum Ausgeben der ersten und/oder zweiten Datensequenz davon als Hash-Schlüssel beinhaltet.

15. System nach einem der Ansprüche 11 bis 14, das ferner wenigstens einen zweiten fernen Server umfasst, der mit dem Netzwerk verbunden ist, und wobei das mobile Datenverarbeitungsendgerät ferner zum Weiterleiten der erhaltenen Anwendung zu dem zweiten fernen Server für eine ferne Authentifikation konfiguriert ist, wenn die extrahierte erste und zweite Datensequenz nicht jeweils mit gespeicherten entsprechenden ersten und zweiten Datensequenzen übereinstimmen.

## Revendications

1. Procédé d'authentification d'une application pour un terminal mobile de traitement de données connecté à un réseau sur lequel l'application est obtenue depuis un premier serveur distant,
le procédé étant **caractérisé par** les étapes consistant à :
coder, dans une application d'origine, une première séquence de données représentative exclusivement de sa source de compilation et au moins une seconde séquence de données représentative exclusivement de l'application d'origine ;
stocker l'application, incluant les première et seconde séquences de données codées, sur le premier serveur distant ;
stocker une pluralité de premières et secondes séquences de données au niveau du terminal mobile de traitement de données ;
obtenir, par le terminal mobile de traitement de données, l'application depuis le premier serveur distant ;
extraire, au niveau du terminal mobile de traitement de données, les première et seconde séquences de données de l'application obtenue et comparer les première et seconde séquences de données à la pluralité de premières et secondes séquences de données stockées pour des concordances respectives ; et
authentifier, au niveau du terminal mobile de traitement de données, l'application obtenue quand les première et seconde séquences de données extraites concordent respectivement avec des première et seconde séquences de données correspondantes stockées.

2. Procédé selon la revendication 1, comprenant en outre l'étape consistant à stocker la pluralité de premières et secondes séquences de données dans une liste représentative d'applications obtenues par une pluralité de terminaux mobiles de traitement de données connectés au réseau pendant une période de temps prédéterminée.

3. Procédé selon la revendication 2, dans lequel l'étape de comparaison comprend en outre l'étape consistant à comparer les première et seconde séquences de données de l'application obtenue à la liste de premières et secondes séquences de données stockées.

4. Procédé selon l'une quelconque des revendications 1 à 3, comprenant en outre les étapes consistant à installer l'application obtenue au niveau du terminal mobile de traitement de données après son authentification, et à bloquer, au moins temporairement, l'installation quand au moins une concordance de la première ou de la seconde séquence de données de l'application obtenue échoue.

5. Procédé selon la revendication 3, comprenant en outre l'étape consistant à déterminer au moins une permission de traitement de données demandée par une application obtenue mais temporairement bloquée, et comparer la permission déterminée à un ensemble prédéterminé de permissions de traitement de données d'application jugées comme étant malveillantes.

6. Procédé selon l'une quelconque des revendications 1 à 5, dans lequel une des deux ou les deux première et seconde séquences de données représentatives exclusivement sont une clé de hachage, et dans lequel l'étape d'extraction comprend en outre l'étape consistant à soumettre l'application obtenue à une fonction de hachage pour émettre au moins une des première et seconde séquences de données de celle-ci sous la forme d'une clé de hachage.

7. Procédé selon l'une quelconque des revendications 1 à 6, comprenant en outre l'étape consistant à transférer l'application obtenue à un second serveur distant pour une authentification distante quand les première et seconde séquences de données extraites ne concordent respectivement pas aux premières et secondes séquences de données correspondantes stockées.

8. Procédé selon la revendication 7, dans lequel l'étape de transfert amène le terminal mobile de traitement de données à suspendre l'installation de l'application obtenue jusqu'à ce que le second serveur distant communique une authentification distante de celle-ci.

9. Procédé selon l'une quelconque des revendications 1 à 8, dans lequel l'application d'origine est un fichier APK et la première séquence de données représentative exclusivement de sa source de compilation est un certificat signé stocké dans le répertoire META-INF de celui-ci.

10. Procédé selon l'une quelconque des revendications 1 à 9, dans lequel la seconde séquence de données représentative exclusivement de l'application d'origine est associée à l'icône d'application.

11. Système d'authentification d'une application au niveau d'un terminal mobile de traitement de données, comprenant :
le terminal mobile de traitement de données ;
un réseau auquel le terminal mobile est connecté ; et
au moins un premier serveur distant depuis lequel l'application est obtenue par le terminal mobile sur le réseau ;
le système étant **caractérisé en ce que** :
le système comprend un moyen permettant de coder, dans une application d'origine, une première séquence de données représentative exclusivement d'une source de compilation de l'application d'origine et au moins une seconde séquence de données représentative exclusivement de l'application d'origine ; et un moyen permettant de stocker l'application, incluant les première et seconde séquences de données codées, sur le premier serveur distant ; et
le terminal mobile de traitement de données est configuré pour : stocker une pluralité de premières et secondes séquences de données ; obtenir l'application depuis le premier serveur distant ; extraire les première et seconde séquences de données de l'application obtenue ; comparer les première et seconde séquences de données à la pluralité de premières et secondes séquences de données stockées pour des concordances respectives ; et authentifier l'application obtenue quand les première et seconde séquences de données extraites concordent respectivement avec des première et seconde séquences de données correspondantes stockées.

12. Système selon la revendication 11, dans lequel le terminal mobile de traitement de données est en outre configuré pour :
installer l'application obtenue au niveau du terminal mobile de traitement de données après son authentification ; et
bloquer, au moins temporairement, une installation de l'application obtenue quand au moins une concordance de la première ou de la seconde séquence de données de l'application obtenue échoue.

13. Système selon la revendication 12, dans lequel le terminal mobile de traitement de données est en outre configuré pour :
déterminer au moins une permission de traitement de données demandée par une application obtenue mais temporairement bloquée ; et
comparer la permission déterminée à un ensemble prédéterminé de permissions de traitement de données d'application jugées comme étant malveillantes.

14. Système selon l'une quelconque des revendications 11 à 13, dans lequel une des deux ou les deux première et seconde séquences de données représentatives exclusivement sont une clé de hachage, et dans lequel l'extraction par le terminal mobile de traitement de données configuré comprend l'étape consistant à soumettre l'application obtenue à une fonction de hachage pour émettre au moins une des première et seconde séquences de données de celle-ci sous la forme d'une clé de hachage.

15. Système selon l'une quelconque des revendications 11 à 14, comprenant en outre au moins un second serveur distant connecté au réseau, et dans lequel le terminal mobile de traitement de données est en outre configuré pour transférer l'application obtenue au second serveur distant pour une authentification distante quand les première et seconde séquences de données extraites ne concordent respectivement pas aux premières et secondes séquences de données correspondantes stockées.
